# FASCICULE DE BREVET EUROPEEN

(11) **EP 2 886 575 B1**
(45) Date de publication et mention de la délivrance du brevet: **21.09.2016**
(21) Numéro de dépôt: 14197282.8
(22) Date de dépôt: 11.12.2014
(51) Int. Cl.: C08G 18/71, C08G 18/75, C08G 18/80, C08K 3/00, C08G 18/08, C08G 18/10, C08G 18/22, C08G 18/28, C08G 18/38, C09J 171/02, C09J 175/08, F17C 3/00, C08K 3/22, C08K 3/26

(54) **Utilisation d'une composition adhésive a base de polymères silyles pour applications cryogéniques**
Verwendung einer Klebezusammensetzung auf der Basis von Silyl-Polymeren für kryogene Anwendungen
Use of an adhesive composition based on silylated polymers for cryogenic applications

(30) Priorité: 18.12.2013 FR 1362865
(43) Date de publication de la demande: 24.06.2015
(73) Titulaire: BOSTIK SA, 93210 La Plaine Saint Denis (FR)
(72) Inventeur: Boyer, Aurélie, 69003 LYON (FR); Chartrel, Jean-François, 60400 CUTS (FR)
(74) Mandataire: Hirsch & Associés

(56) Documents cités:
- WO-A-2010/052671
- FR-A5- 2 109 153
- ANASHKIN O P ET AL: "Cryogenic vacuum tight adhesive", CRYOGENICS, ELSEVIER, KIDLINGTON, GB, vol. 39, no. 9, 1 septembre 1999 (1999-09-01), pages 795-798, XP027214445, ISSN: 0011-2275 [extrait le 1999-09-01]
- Wacker Chemi AG: "SILRES HP 2000", http://www.wacker.com/cms/media/publicatio ns/downloads/6870_EN.pdf, janvier 2012 (2012-01), XP002735877, Extrait de l'Internet: URL:internet [extrait le 2015-02-12]

## Description

### DOMAINE DE L'INVENTION

La présente invention concerne l'utilisation d'une composition adhésive comprenant au moins un polymère silylé et au moins une charge pour l'assemblage d'une cuve étanche comprenant un fluide à une température inférieure ou égale à -100°C et d'une structure porteuse choisie parmi la coque d'un navire, la carlingue d'un avion et un conteneur.

### ARRIERE-PLAN TECHNOLOGIQUE

Dans un méthanier, les cuves dans lesquelles le méthane liquide est stocké, sont constituées de différents matériaux et barrières qui permettent d'assurer l'étanchéité.

Pour le stockage et le transport de méthane liquide à une température de -163°C, une excellente isolation est indispensable. De plus une réduction de l'épaisseur d'isolant est souhaitée pour maximiser le volume transporté ou stocké.

La pression de stockage est généralement proche de la pression atmosphérique. La très légère surpression crée par l'évaporation est régulée, l'évent (« boil out » en anglais) peut être re-comprimé et liquéfié, ou simplement brûlé pour produire de l'énergie.

Dans les nouvelles générations de méthaniers, les cuves étanches et isolantes intégrées dans une structure porteuse, notamment de navire, comportent deux barrières d'étanchéité successives, une barrière primaire au contact avec le produit contenu dans la cuve et une autre barrière, dite secondaire, disposée entre la barrière primaire et la structure porteuse, ces deux barrières d'étanchéité étant alternées avec deux barrières thermiquement isolantes.

La barrière isolante secondaire est fixée sur la structure porteuse constituée par la coque interne d'un navire au moyen de divers procédés connus de l'homme du métier.

Cela s'applique également aux cuves terrestres pour le stockage de gaz liquéfié. Ces cuves terrestres présentent également deux barrières d'étanchéité successives alternées avec deux couches d'isolation thermique. Dans ce cas, la structure porteuse peut être un conteneur dont la structure est généralement réalisée en béton.

On peut également imaginer le transport aérien de fluides à basse température. Dans ce cas, la structure porteuse peut être la carlingue d'un avion.

Dans ces trois réalisations, les barrières isolantes primaire et secondaire sont constituées par une succession de blocs isolants qui, soit sont des caissons parallélépipédiques fermés remplis d'un calorifuge, soit sont constitués de blocs de mousse isolante collés sur un panneau porteur.

Le matériau utilisé pour réaliser les panneaux des caissons ou les panneaux porteurs est généralement du bois contreplaqué, pour une question de coût de revient et pour ses qualités isolantes.

Les blocs isolants de la barrière secondaire peuvent être fixés mécaniquement sur la structure porteuse ou peuvent être collés par l'intermédiaire de leur panneau externe sur ladite structure.

Dans le cas où les blocs isolants sont collés sur la structure porteuse, les matériaux généralement utilisés pour le collage sont des résines époxy se présentant sous forme bicomposante. Les mastics en résine époxy traditionnellement utilisés présentent un module de compression élevé, généralement supérieur à 1000 MPa, à basse température (températures allant de -20°C à -50°C), n'offrant quasiment aucune capacité à amortir les chocs et à absorber les déformations.

Le document WO 2010/052671 concerne l'utilisation d'une composition adhésive bicomposante à base de polyuréthane (PU2K) pour assurer le collage entre la barrière primaire et la barrière secondaire d'une cuve de stockage et/ou de transport de gaz liquéfié. Les compositions adhésives bicomposantes à base de polyuréthane ne présentent pas un module de compression satisfaisant à basse température, une composition PU2K présente généralement un module de compression supérieur à 1000 MPa à des températures inférieures à 0°C.

Le document FR 2109153 propose un système de fixation d'une couche de calorifugeage pour citernes faisant intervenir des moyens mécaniques et un collage au moyen d'un adhésif de type silicone. Les polymères de type silicone ou polysiloxane ou encore polydiméthylsiloxane présentent des modules de compression très faibles ; ils sont très flexibles. Pour une composition adhésive comprenant de tels polymères, la contrainte à la rupture est seulement de l'ordre de 2 MPa. Ces compositions adhésives ne permettent pas d'obtenir les performances mécaniques requises pour les applications visées par la présente invention.

Le but de la présente invention est de fournir une solution adaptée aux contraintes de pressions et de tractions dans des applications industrielles cryogéniques, telles que les contraintes liées à l'assemblage, au maintien et au calage d'une cuve étanche, telle qu'une cuve de stockage et/ou de transport de gaz liquéfié, et d'une structure porteuse.

### RESUME DE L'INVENTION

Un premier objet de la présente invention concerne l'utilisation d'une composition adhésive comprenant au moins un polymère silylé et au moins une charge pour l'assemblage d'une cuve comprenant un fluide à une température inférieure ou égale à -100°C et d'une structure porteuse choisie parmi la coque d'un navire, la carlingue d'un avion et un conteneur.

De préférence, le module de compression de la composition adhésive réticulée va de 15 à 600 MPa à 20°C.

De préférence, le module de compression de la composition adhésive réticulée est inférieur ou égal à 1000 MPa à -30°C.

De préférence, la composition adhésive réticulée présente une contrainte à la rupture supérieure ou égale à 3MPa.

Selon un mode de réalisation, le fluide à une température inférieure ou égale à -100°C est du gaz naturel liquéfié.

De préférence, la structure porteuse est la coque d'un navire.

De préférence, la composition adhésive comprend :
- de 30 à 80% en poids d'au moins un polymère silylé, et
- de 20 à 70% en poids d'au moins une charge,
par rapport au poids total de la composition adhésive.

Selon un mode de réalisation de l'invention, la composition adhésive comprend au moins deux charges différentes.

De préférence, la composition adhésive comprend au moins une charge inorganique et au moins une charge organique.

Selon un mode de réalisation de l'invention, la composition adhésive comprend en outre au moins un catalyseur.

Le polymère silylé est choisi parmi les polymères de formules (II), (IIbis), (III) ou (IV) ci-dessous :

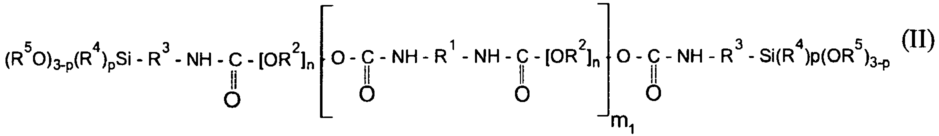

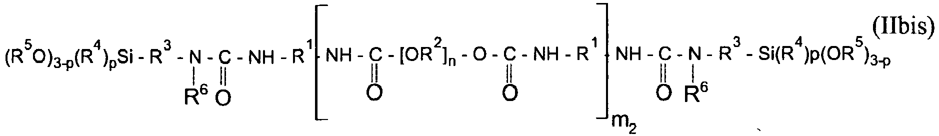

(R⁵O)₃₋ₚ(R⁴)ₚSi-R³-[OR²]ₙ-O-R³-Si(R⁴)ₚ(OR⁵₎₃₋ₚ (III)

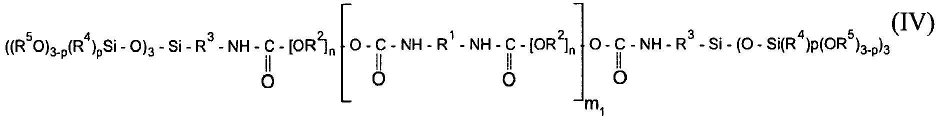

dans les formules (II), (IIbis), (III), et (IV) :
- R¹ représente un radical divalent hydrocarboné comprenant de 5 à 15 atomes de carbone qui peut être aromatique ou aliphatique, linéaire, ramifié ou cyclique,
- R³ représente un radical divalent alkylène linéaire ou ramifié comprenant de 1 à 6 atomes de carbone,
- R² représente un radical divalent alkylène linéaire ou ramifié comprenant de 2 à 4 atomes de carbone,
- R⁴ et R⁵, identiques ou différents, représentent chacun un radical alkyl linéaire ou ramifié comprenant de 1 à 4 atomes de carbone, avec la possibilité que quand il y a plusieurs radicaux R⁴ (ou R⁵), ces derniers soient identiques ou différents
- R⁶ représente un atome d'hydrogène, un radical phényle ou un radical alkyle linéaire, ramifié ou cyclique comprenant de 1 à 6 atomes de carbone,
- n est un nombre entier tel que la masse molaire moyenne du bloc polyéther de formule -[OR²]ₙ- va de 300 g/mole à 40000 g/mole,
- m₁ est zéro ou un nombre entier tel que la masse molaire moyenne du polymère va de 500 g/mole à 50000 g/mole,
- m₂ est un nombre entier différent de zéro tel que la masse molaire moyenne du polymère va de 500 g/mole à 50000 g/mole,
- p est un nombre entier égal à 0, 1 ou 2.

De préférence, la composition adhésive comprend au moins un polymère de formule (II), (IIbis) ou (III) et au moins un polymère de formule (IV).

Un second objet de la présente invention concerne un procédé d'assemblage d'une cuve comprenant un fluide à une température inférieure ou égale à -100°C et d'une structure porteuse choisie parmi la coque d'un navire, la carlingue d'un avion et un conteneur, ledit procédé comprenant :
a) l'application d'une composition adhésive telle que définie dans la présente invention sur la surface externe de la cuve à une température allant de 15°C à 35°C et une humidité relative allant de 20% à 70%, et
b) le contre-collage de la surface externe de la cuve sur la surface de la structure porteuse.

Un troisième objet de la présente invention concerne l'assemblage d'une cuve comprenant un fluide à une température inférieure ou égale à -100°C et d'une structure porteuse choisie parmi la coque d'un navire, la carlingue d'un avion et un conteneur caractérisé en ce que l'assemblage est réalisé à l'aide d'une composition adhésive telle que définie dans la présente invention.

La présente invention permet de fournir une composition adhésive qui après réticulation résiste aux pressions, compressions et aux tractions qui lui sont appliquées.

La présente invention permet de compenser les irrégularités de surface de la structure porteuse grâce à une composition adhésive qui peut s'adapter aux formes des blocs isolants et de la structure porteuse.

La présente invention permet de fournir un assemblage qui est capable d'absorber une partie des déformations de la coque du navire et/ou de la cuve, dues par exemple au mouvement du gaz liquéfié à l'intérieur de la cuve engendré par la houle, et permet ainsi de prévenir des avaries dommageables.

La présente invention permet une application simplifiée de la composition adhésive, en mono-composant.

La composition adhésive définie ci-dessus est particulièrement bien adaptée aux applications cryogéniques, notamment sur toute la gamme de températures allant de -50°C à +40°C. En effet, la composition adhésive réticulée conserve un module de compression inférieur ou égal à 1000 MPa à -30°C.

La composition adhésive réticulée peut donc être soumise à des températures allant de -50°C à +40°C et résistera, c'est-à-dire que l'assemblage ne subira pas de décollement, ni de décohésion, ni de déplacement majeur de la cuve par rapport à la surface porteuse.

### BREVE DESCRIPTION DES FIGURES

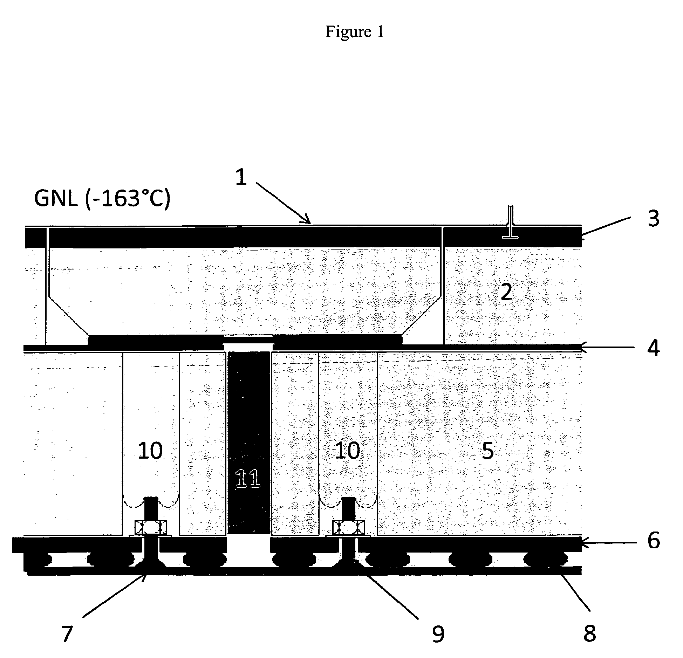

La figure 1 représente un schéma en coupe d'une partie de la cuve étanche, destinée au transport par mer de gaz liquéfié, avec la zone de collage représentée par les cordons de composition adhésive 8 pour l'assemblage de la cuve et de la structure porteuse 7, telle que la coque d'un navire.

### EXPOSE DETAILLE DES MODES DE REALISATION DE L'INVENTION

La présente invention concerne l'utilisation d'une composition adhésive comprenant au moins un polymère silylé tel que défini dans la revendication 1 et au moins une charge pour l'assemblage d'une cuve comprenant un fluide à une température inférieure ou égale à -100°C et d'une structure porteuse choisie parmi la coque d'un navire, la carlingue d'un avion et un conteneur.

### Composition adhésive

De préférence, la composition adhésive définie dans la présente invention comprend :
- de 30 à 80% en poids, de préférence de 35 à 75% en poids, de préférence encore de 40 à 70% en poids, d'au moins un polymère silylé,
- de 20 à 70% en poids, de préférence de 25 à 65% en poids, de préférence encore de 30 à 60% en poids, d'au moins une charge,
par rapport au poids total de la composition adhésive.

Selon un mode de réalisation, la composition adhésive comprend :
- de 30 à 80% en poids, de préférence de 35 à 75% en poids, de préférence encore de 40 à 70% en poids, d'au moins un polymère silylé,
- de 20 à 70% en poids, de préférence de 25 à 65% en poids, de préférence encore de 30 à 60% en poids, d'au moins une charge,
- de 0,1 à 10% en poids d'au moins un additif choisi parmi un agent rhéologique, un catalyseur et un antioxydant,
par rapport au poids total de la composition adhésive.

Selon un mode de réalisation, la composition adhésive consiste essentiellement en :
- de 30 à 80% en poids, de préférence de 35 à 75% en poids, de préférence encore de 40 à 70% en poids, d'au moins un polymère silylé,
- de 20 à 70% en poids, de préférence de 25 à 65% en poids, de préférence encore de 30 à 60% en poids, d'au moins une charge,
- de 0,1 à 10% en poids d'au moins un autre additif choisi parmi un agent rhéologique, un catalyseur, un antioxydant, un promoteur d'adhésion, un plastifiant,
par rapport au poids total de la composition adhésive.

De préférence, la composition adhésive définie dans la présente invention présente après réticulation un module de compression à +20°C allant de 15 à 600 MPa, de préférence allant de 20 à 500 MPa, de préférence encore allant de 25 à 400 MPa, et un module de compression à -30°C inférieur ou égal à 1000 MPa, de préférence inférieur ou égal à 750 MPa, de préférence encore inférieur ou égal à 500 MPa.

Le module de compression est mesuré selon la norme ASTM D695. Des éprouvettes de compression en forme de plots de dimension 20mm x 10mm x 10mm sont réalisées en appliquant la composition à tester dans un moule en téflon. Après 15 jours de réticulation à +23°C et 50% d'humidité relative, les éprouvettes sont retirées du moule, placées à la température désirée pour la mesure (par exemple +20°C et -30°C) et compressées à l'aide d'un dynamomètre à une vitesse de 1mm/min.

De préférence, la composition adhésive présente en outre les caractéristiques suivantes :
- une élongation à la rupture à +23°C supérieure ou égale à 4%, de préférence supérieure ou égale à 10%, de préférence encore supérieure ou égale à 15%, et/ou
- une contrainte à la rupture à +23°C supérieure ou égale à 3 MPa, de préférence supérieure ou égale à 3,5 MPa, et/ou
- une densité allant de 1,2 à 1,7, de préférence allant de 1,3 à 1,5, et/ou
- un temps ouvert supérieur ou égal à 10 minutes, de préférence allant de 10 à 150 minutes, de préférence encore de 30 à 90 minutes.

L'élongation et la contrainte à la rupture sont mesurées selon la norme ISO 527-2. Des éprouvettes haltères de type h2 sont réalisées en appliquant la composition à tester dans un moule en téflon. Après 15 jours de réticulation à 23°C et 50% d'humidité relative, les éprouvettes sont retirées du moule et tractionnées à l'aide d'un dynamomètre à une vitesse de 100 mm/min.

La densité est mesurée sur un mastic réticulé selon la norme ISO 2811-1 à l'aide d'un picnomètre.

Le temps ouvert TO d'une colle est défini comme le temps à ne pas dépasser avant l'assemblage des éléments. En dehors du TO, les propriétés recherchées ne sont plus assurées: le mastic présente une peau en surface ce qui n'assure plus un bon mouillage du support à contrecoller.

Il est influencé par les conditions climatiques ambiantes d'application (humidité, température).

Dans le cas des produits mono-composants, il est défini par le temps de formation de peau en surface du joint.

### Polymère silylé

Au sens de la présente invention, on entend par polymère silylé, un polymère comprenant au moins un groupement de formule (I) :

-Si(R⁴)ₚ(OR⁵)₃₋ₚ (I)

dans laquelle :
- R⁴ et R⁵, identiques ou différents, représentent chacun un radical alkyl linéaire ou ramifié comprenant de 1 à 4 atomes de carbone, avec la possibilité que quand il y a plusieurs radicaux R⁴ (ou R⁵), ces derniers soient identiques ou différents ;
- p est un nombre entier égal à 0, 1 ou 2.

Le polymère silylé tel que défini ci-dessus comprend au moins un groupement alkoxysilyle réticulable. La composition adhésive n'est pas réticulée avant son application sur le substrat à coller. La composition adhésive est appliquée dans des conditions permettant sa réticulation. La réticulation de la composition adhésive a pour effet la création, entre les chaines polymériques du polymère silylé décrit ci-dessus et sous l'action de l'humidité atmosphérique, de liaisons de type siloxane qui conduisent à la formation d'un réseau polymérique tri-dimensionnel. La composition adhésive réticulée possède de bonnes propriétés thermomécaniques, en particulier un module de compression tel que défini ci-dessus.

De préférence, le ou les polymères silylés présentent une masse molaire moyenne allant de 500 à 50000 g/mol, de préférence encore allant de 700 à 20000 g/mol.

La masse molaire des polymères peut être mesurée par des méthodes bien connues de l'homme du métier, par exemple par chromatographie d'exclusion stérique en utilisant des étalons de type polyéthylène glycol.

Le polymère silylé répond à l'une des formules (II), (IIbis), (III) ou (IV) :

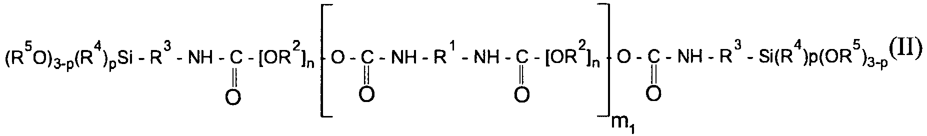

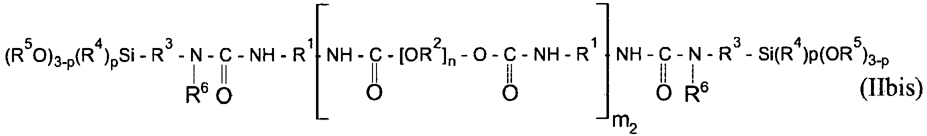

(R⁵O)₃₋ₚ(R⁴)ₚSi-R³-[OR²]ₙ-O-R³-Si(R⁴)ₚ(OR⁵)₃₋ₚ (III)

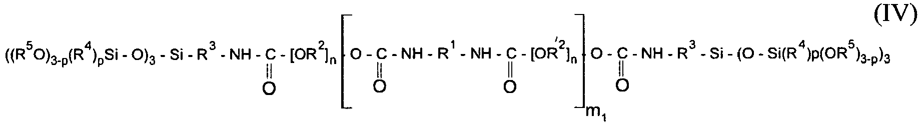

Dans les formules (II), (IIbis), (III), et (IV) :
- R¹ représente un radical divalent hydrocarboné comprenant de 5 à 15 atomes de carbone qui peut être aromatique ou aliphatique, linéaire, ramifié ou cyclique,
- R³ représente un radical divalent alkylène linéaire ou ramifié comprenant de 1 à 6 atomes de carbone,
- R² représente un radical divalent alkylène linéaire ou ramifié comprenant de 2 à 4 atomes de carbone,
- R⁴ et R⁵, identiques ou différents, représentent chacun un radical alkyl linéaire ou ramifié comprenant de 1 à 4 atomes de carbone,
- R⁶ représente un atome d'hydrogène, un radical phényle ou un radical alkyle linéaire, ramifié ou cyclique comprenant de 1 à 6 atomes de carbone,
- n est un nombre entier tel que la masse molaire moyenne du bloc polyéther de formule -[OR²]ₙ- va de 300 g/mole à 40000 g/mole,
- m₁ est zéro ou un nombre entier tel que la masse molaire moyenne du polymère va de 500 g/mole à 50000 g/mole,
- m₂ est un nombre entier différent de zéro tel que la masse molaire moyenne du polymère va de 500 g/mole à 50000 g/mole,
- p est un nombre entier égal à 0, 1 ou 2.

De préférence, R¹ est choisi parmi l'un des radicaux divalents suivants dont les formules ci-dessous font apparaître les 2 valences libres :
a) le radical divalent dérivé de l'isophorone : 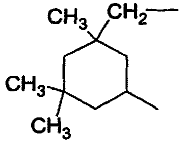
b) 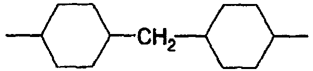
c) 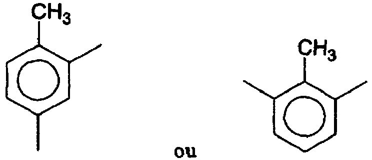
d) 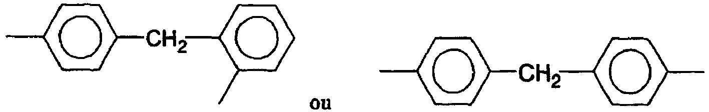
e) -(CH₂)₆- (ou radical hexaméthylène).

Selon un mode de réalisation de l'invention, la composition adhésive comprend au moins un polymère silylé de formule (II), (IIbis) ou (III) et au moins un polymère silylé de formule (IV).

Parmi les polymères répondant à la formule (II), on peut citer :
- GENIOSIL® STP-E15 (disponible auprès de Wacker) : polyéther comprenant deux groupements (I) de type triméthoxy (m₁ égal à 0, p égal à 0 et R⁴ représente un groupement méthyle) présentant une masse molaire moyenne en nombre de 15000 g/mol;
- GENIOSIL® STP-E10 (disponible auprès de Wacker) : polyéther comprenant deux groupements (I) de type diméthoxy (m₁ égal à 0, p égal à 1 et R⁴ représente un groupement méthyle) présentant une masse molaire moyenne en nombre de 15000 g/mol ;
- SPUR+® 1050MM (disponible auprès de Momentive) : polyuréthane comprenant deux groupements (I) de type triméthoxy (m₁ différent de 0, p égal à 0 et R⁴ représente un groupement méthyle) présentant une masse molaire de 16393 g/mol.

Parmi les polymères répondant à la formule (IIbis), on peut citer :
- Polymère PS7 tel que décrit dans la partie expérimentale ci-dessous : polyuréthane comprenant deux groupements (I) de type triméthoxy (p égal à 0 et R⁴ représente un groupement méthyle) présentant une masse molaire de 22500 g/mol.

Parmi les polymères répondant à la formule (III), on peut citer le polymère MS Polymer® S203H (disponible auprès de Kaneka) correspondant à un polyéther comprenant deux groupements (I) de type diméthoxy (p égal à 1 et R⁴ représente un groupement méthyle) ayant une masse molaire de 16000 g/mol.

Parmi les polymères répondant à la formule (IV), on peut citer le polymère GENIOSIL® XB502 (disponible auprès de Wacker) correspondant à un mélange de deux polymères présentant des masses molaires de 800 g/mole et 14000 g/mol dans lesquelles p est égal à 0 et R⁴ est un groupement méthyle.

Selon un mode de réalisation de l'invention, les polymères présents dans la composition adhésive sont choisis parmi les polymères silylés tels que définis ci-dessus.

### Charge

Les charges peuvent être choisies parmi les charges inorganiques, les charges organiques et leurs mélanges.

Les charges inorganiques peuvent être choisies parmi les carbonates de calcium, les polycarbonates de calcium, l'hydroxyde d'aluminium, les talcs, les kaolins, le noir de carbone, les silices et fumée de silice, le quartz. On peut citer notamment la SOCAL® 312 (disponible auprès de Solvay) et la MARTINAL® OL104 (disponible auprès de Martinwerk).

Les charges organiques peuvent être choisies parmi le polychlorure de vinyle, le polyéthylène, le polyamide, des résines de styrène-butadiène, ou tout autre polymère organique sous forme de poudre. On peut citer notamment le Solvine 373 MC de chez Solvay.

Selon un mode de réalisation, la composition adhésive comprend au moins une charge minérale et au moins une charge organique.

De préférence, les charges présentent une granulométrie allant de 0,010 à 20 µm, de préférence allant de 0,020 à 15 µm, de préférence encore allant de 0,030 à 5 µm.

Les charges présentes dans la composition adhésive peuvent assurer différentes fonctions au sein de la composition, par exemple une fonction d'agent rhéologique.

### Autres additifs

Selon un mode de réalisation, la composition adhésive comprend en outre de 0,1 à 10% en poids d'autres additifs, par rapport au poids total de la composition adhésive.

Par « autres additifs », on entend des additifs qui ne sont pas ni des polymères silylés ni des charges.

Le ou les autres additifs peuvent être choisis parmi les catalyseurs, les promoteurs d'adhésion, les plastifiants, les agents rhéologiques, dans la mesure où ils ne se présentent pas sous la forme d'une poudre (charges).

Des additifs peuvent être prévus pour ajuster la rhéologie de la composition adhésive selon les contraintes d'application. Par exemple, un additif augmentant le seuil d'écoulement (agent rhéologique) peut être ajouté afin d'éviter les coulures lors de l'application de la composition, en particulier lorsque la surface recevant la couche de composition adhésive n'est pas horizontale.

Selon un mode de réalisation de l'invention, la composition adhésive comprend de 0,1 à 5% en poids d'agent(s) rhéologique(s), en plus des charges présentes dans la composition, et différents de ces charges.

Selon un mode de réalisation, la composition adhésive comprend en outre au moins un catalyseur.

De préférence, la composition adhésive comprend de 0,01 à 5% en poids de catalyseur(s), de préférence de 0,05 à 3% en poids de catalyseur(s), de préférence encore de 0,08 à 2% en poids de catalyseur(s).

D'autres additifs peuvent être prévus pour améliorer la stabilité de la composition adhésive lors de son stockage. On peut citer des capteurs d'humidité comme le vinyltriméthoxysilane.

La composition adhésive peut être préparée par mélange du ou des polymères silylés et de la ou des charges à une température allant de 10°C à 40°C et à une humidité relative allant de 0,1% à 50%. Lorsqu'un catalyseur est présent, il est de préférence ajouté dans une seconde étape, après le mélange des polymères silylés et des charges. Les autres additifs sont introduits conformément aux usages habituels.

### Assemblage

Au sens de la présente invention, on entend par assemblage, le résultat des actions de coller, caler, fixer, maintenir, mettre en contact, ...

L'assemblage obtenu correspond à la succession d'un élément de la cuve, d'une couche de composition adhésive et de la structure porteuse.

### Cuve

Selon un mode de réalisation, la cuve est une cuve étanche comprenant deux barrières d'étanchéité successives alternées avec deux couches d'isolation thermique appelées barrières isolantes. De préférence, la première barrière d'étanchéité, dite primaire, est au contact du fluide, par exemple du gaz liquéfié, tandis qu'une deuxième barrière, dite secondaire ou de confinement, est disposée entre les deux barrières isolantes. Les différentes barrières peuvent être assemblées les unes aux autres et la barrière isolante secondaire est alors fixée sur la structure porteuse mécaniquement et par collage.

Dans la présente invention, la fixation (ou l'assemblage) de la barrière isolante secondaire à la structure porteuse est effectuée à l'aide de la composition adhésive telle que définie ci-dessus.

Par « cuve étanche », au sens de la présente invention, on entend une cuve qui est imperméable aux fluides, en particulier aux liquides, tels que le gaz naturel liquéfié ou bien l'eau de mer.

La barrière primaire de la cuve peut être en Inox ou en Invar. La barrière secondaire de la cuve peut être en Invar ou composite (TRIPLEX^{®}). Une description de ces barrières est donnée par exemple dans le document WO 2010/052671.

Pour la fabrication et la description plus générale de ces cuves, on pourra se référer à l'enseignement fourni par les documents FR 2822814, FR 2887010, FR 2781557 de la société Gaz Transport et Technigaz (GTT).

De préférence, la cuve est une cuve de stockage et/ou de transport de gaz liquéfié.

Selon un mode de réalisation, les barrières isolantes primaire et secondaire sont réalisées par juxtaposition de plusieurs blocs isolants, par exemple des caissons parallélépipédiques fermés remplis d'un calorifuge, dont l'épaisseur peut varier selon le pouvoir isolant recherché.

Selon un autre mode de réalisation, les barrières isolantes primaire et secondaire sont réalisées par juxtaposition de blocs de mousse isolante collés sur un panneau porteur.

De préférence, le matériau utilisé pour réaliser les panneaux des caissons ou les panneaux porteurs est du bois contreplaqué.

L'assemblage de la barrière isolante secondaire et de la structure porteuse est alors effectué par l'intermédiaire du panneau externe de ladite barrière isolante secondaire.

La composition adhésive telle que définie ci-dessus est de préférence appliquée sur le panneau externe de la barrière isolante secondaire sous la forme d'un ou plusieurs cordons de composition adhésive.

Lorsque la barrière isolante se présente sous la forme d'une juxtaposition de plusieurs panneaux, la composition adhésive est appliquée sur le panneau externe, puis le panneau encollé est ensuite affiché sur la surface porteuse.

Lors de l'assemblage, de préférence, le panneau encollé est positionné (contrecollé) sur la structure porteuse et les caractéristiques de la composition adhésive telle que définie ci-dessus permettent au panneau de s'adapter parfaitement à la forme de la structure porteuse. Ce qui permet notamment de compenser les irrégularités éventuelles, du panneau et/ou de la structure porteuse. Certaines constructions n'exploitent d'ailleurs que cette propriété, la structure porteuse étant protégée par un film antiadhésif et la barrière isolante primaire étant fixée mécaniquement à la structure porteuse.

Les autres barrières constituant la cuve étanche sont ensuite assemblées selon des procédés connus de l'homme du métier.

### Fluide contenu dans la cuve

Le fluide contenu dans la cuve se trouve à une température inférieure ou égale à -100°C, de préférence inférieure ou égale à -125°C, de préférence encore inférieure ou égale à -150°C.

De préférence, le fluide est un liquide, de préférence du gaz liquéfié, en particulier du gaz naturel liquéfié (GNL).

Le gaz naturel liquéfié est généralement stocké et transporté à une température de -163°C.

### Structure porteuse

Au sens de la présente invention, la structure porteuse désigne la coque d'un navire, la carlingue d'un avion et un conteneur.

La structure porteuse est destinée à contenir la cuve.

La composition adhésive définie ci-dessus trouve plus particulièrement son utilité dans la fabrication des cuves intégrées dans une structure porteuse, notamment la coque d'un navire destiné au transport par mer des gaz liquéfiés et, en particulier, au transport des gaz naturels liquéfiés (GNL) à forte teneur en méthane.

De préférence, les cuves intégrées sont étanches et thermiquement isolantes.

La présente invention concerne également un procédé d'assemblage d'une cuve, de préférence une cuve étanche, comprenant un fluide à une température inférieure ou égale à -100°C et d'une structure porteuse choisie parmi la coque d'un navire, la carlingue d'un avion et un conteneur, ledit procédé comprenant :
a) l'application d'une composition adhésive telle que définie dans la présente invention sur la surface externe de la cuve étanche à une température allant de 15°C à 35°C et une humidité relative allant de 20% à 70%, et
b) le contre-collage de la surface externe de la cuve étanche sur la surface de la structure porteuse.

L'application de la composition adhésive est effectuée à une température allant de 15°C à 35°C et une humidité relative allant de 20% à 70% pour permettre la réticulation de la composition adhésive.

Selon un mode de réalisation, la surface externe de la cuve est le panneau externe de la barrière isolante secondaire.

Selon un mode de réalisation de l'invention, la composition adhésive est appliquée sous la forme d'un cordon de composition adhésive. Chaque panneau externe de la cuve peut ainsi recevoir un ou plusieurs cordons de composition adhésive. De préférence, lorsque plusieurs cordons sont appliqués sur un même panneau, ces cordons sont sensiblement parallèles les uns par rapport aux autres.

Selon une variante du procédé d'assemblage de l'invention, la composition adhésive telle que définie dans la présente invention est d'abord appliquée sur la surface de la structure porteuse puis, la surface externe de la cuve est appliquée sur la surface de structure porteuse revêtue de la composition adhésive.

La présente invention concerne également un assemblage d'une cuve étanche comprenant un fluide à une température inférieure ou égale à -100°C et d'une structure porteuse choisie parmi la coque d'un navire, la carlingue d'un avion et un conteneur, ledit assemblage étant caractérisé en ce qu'il est réalisé à l'aide d'une composition adhésive telle que définie dans la présente invention.

L'assemblage selon l'invention comprend alors un joint de colle obtenu après réticulation de la composition adhésive selon l'invention.

De préférence, l'assemblage selon l'invention est l'assemblage d'une cuve étanche telle que définie ci-dessus et d'une structure porteuse. De préférence, la structure porteuse est la coque d'un navire.

De préférence, le fluide est un liquide, de préférence du gaz liquéfié, en particulier du gaz naturel liquéfié (GNL).

La figure 1 représente un schéma en coupe de l'assemblage selon un mode de réalisation de l'invention. Sur la figure 1 sont représentées les membranes primaire 1 et secondaire 4 ainsi que les barrières isolantes primaire 2 et secondaire 5 de la cuve étanche. Lesdites barrières isolantes 2 et 5 comprennent une couche de contreplaqué respectivement 3 et 6. La figure 1 représente également les cordons de composition de colle 8 situés entre le contreplaqué 6 de la barrière isolante secondaire 5 et la structure porteuse 7. Sur la figure 1 sont également représentés des goujons de réglage et de fixation 9 à la structure porteuse 7. Les orifices d'accès à ces goujons sont ensuite refermés par des bouchons isolants 10 pour éviter les ponts thermiques. De même, l'espace entre les panneaux 11 est comblé par de la laine de verre. Dans le cas du transport et/ou stockage de gaz naturel liquéfié à -163°C, la membrane secondaire 4 présente une température d'environ -110°C, la couche de contreplaqué 6 de la barrière isolante secondaire 5 présente une température d'environ -25°C et la structure porteuse peut présenter une température allant de +4°C à +30°C.

### EXEMPLES

Plusieurs compositions adhésives selon l'invention ont été préparées et testées.

Les produits suivants ont été utilisés :
- PS1 : GENIOSIL® XB502 (Wacker) ;
- PS2 : GENIOSIL® STP-E15 (Wacker) ;
- PS3 : GENIOSIL® STP-E10 (Wacker) ;
- PS4 : MS Polymer® S303H (Kaneka) ;
- PS5 : SPUR+® 1050MM (Momentive) ;
- PS6 : Polymère A tel que décrit dans la demande internationale WO2009/106699 (polymère répondant à la formule (II) telle que définie ci-dessus, dans laquelle R¹ représente l'isophorone diisocyanate IPDI) ;
- PS7 : Polymère répondant à la formule (IIbis) telle que définie ci-dessus ;
- CM1 : carbonate de calcium précipité Socal® 312 (Solvay) ayant une granulométrie de 0,05 µm ;
- CM2 : hydroxyde d'aluminium Martical® OL104 (Martinwerk) ayant une granulométrie de 3 µm ;
- CO1 : polychlorure de vinyle Solvin® 373 (Solvay) ;
- AO : Antioxydant Irganox® 1010 (BASF) ;
- CH : capteur d'humidité VTMO® XL10 (Wacker) ;
- PA : promoteur d'adhésion GENIOSIL® GF9 (Wacker) ;
- Kta1 catalyseur diazabicycloundécène (DBU, Sigma) ;
- Kta2 : catalyseur TIBKAT® 422 (Tib Chemicals).

### Synthèse du polymère PS7 :

### Etape (i) : Synthèse d'un polyuréthane comprenant 2 groupes terminaux -NCO et un ou plusieurs blocs polyéther :

Dans un réacteur fermé de 250 ml, équipé d'une agitation, de moyens de chauffe, d'un thermomètre et relié à une pompe à vide, on introduit 83,04 g de polyéther polyol Desmophen® 4028 BD (diol de type polypropylène glycol, de masse molaire de 4000 g/mol, disponible auprès de Bayer) ayant un nombre hydroxyle de 28 mgKOH par g (correspondant à un nombre équivalent de fonction -OH égal à 0,499 mmol/g). L'ensemble est chauffé à 80 °C et maintenu à pression réduite de 20 mbar pendant 1 heure pour déshydrater le polyol polyéther.

On introduit alors dans le réacteur maintenu à pression atmosphérique et porté à une température de 90°C, 0,5 mg d'un catalyseur de carboxylate de bismuth/zinc (Borchi® Kat VP0244 de la société Borchers GmbH) et 8,79 g d'isophorone diisocyanate IPDI (titrant 37,6 % poids/poids en groupe -NCO), les quantités introduites correspondant ainsi à un ratio NCO/OH égal à 1,9. La réaction de polyaddition est poursuivie pendant 4 heures jusqu'à l'obtention de 91,83 g d'un polyuréthane ayant une teneur en -NCO (suivie par titrage potentiométrique avec une amine) égale à 0,406 mmol/g, ce qui correspond à la consommation complète des fonctions hydroxyle du polyéther polyol.

### Etape (ii) : Synthèse d'un polyuréthane terminé par des fonctions urées reliées chacune à un groupe terminal alkoxy silyl :

On introduit dans le réacteur en fin de l'étape (i) 8,23 g de gamma-amino-n-propyl-triéthoxysilane (M=221 g/mol), correspondant à un ratio NCO/NH₂ égal à 1.

Le réacteur est alors maintenu sous atmosphère inerte à 100 °C pendant 1 heure jusqu'à réaction complète (détectée par la disparition de la bande -NCO à l'analyse Infra-rouge).

On obtient 100,06 grammes d'un produit translucide.

Sa viscosité à l'état fondu mesurée par un viscosimètre Brookfield RVT (à 23 °C pour une vitesse de rotation de 20 tour/minute et une aiguille 7) est de 85 000 mPa.s.

Sa masse moléculaire en nombre est de 22500 Da mesurée par chromatographie d'exclusion stérique ou GPC (pour « Gel Permeation Chromatography »).

Les compositions 1 à 13 ont été préparées selon le mode opératoire suivant : les constituants de chaque formulation (excepté le catalyseur) sont introduits dans un mélangeur de contenance 5 kg puis sont agités à 1500 tr/min pendant 30 minutes sous vide. Une circulation d'eau permet de réguler la température du mélange à 30°C maximum. Le ou les éventuelles catalyseurs, promoteurs d'adhésion, capteurs d'humidité et antioxydants sont ensuite ajoutés et le mélange est placé sous agitation pendant encore 10 minutes. La composition adhésive est extraite du mélangeur et stockée dans des cartouches hermétiques.

Le tableau 1 indique les proportions en pourcentage massique de chacun des constituants par rapport au poids total de chaque composition adhésive.

**Tableau 1 : compositions adhésives (% en poids)**

| | 1 | 2 | 3 | 4 | 5 | 6 | 7 | 8 | 9 | 10 | 11 | 12 | 13 |
|---|---|---|---|---|---|---|---|---|---|---|---|---|---|
| PS1 | 39,2 | 49 | 68,6 | 29,4 | 29,4 | 28,8 | 29,4 | 29,4 | - | 24,5 | 34,3 | 29,4 | 29,4 |
| PS2 | - | - | - | 19,6 | - | - | - | - | - | 24,5 | 14,7 | 19,6 | 19,6 |
| PS3 | - | - | - | - | 19,6 | - | - | - | - | - | - | - | - |
| PS4 | - | - | - | - | - | 19,2 | - | - | - | - | - | - | - |
| PS5 | - | - | - | - | - | - | 19,6 | - | - | - | - | - | - |
| PS6 | - | - | - | - | - | - | - | 19,6 | - | - | - | - | - |
| PS7 | - | - | - | - | - | - | - | - | 19,6 | - | - | - | - |
| CM1 | 60 | 50 | 30 | 50 | 50 | 50 | 50 | 50 | 50 | 50 | 50 | - | - |
| CM2 | - | - | - | - | - | - | - | - | - | - | - | 42 | 20 |
| CO1 | - | - | - | - | - | - | - | - | - | - | - | 5 | 27 |
| AO | - | - | - | - | - | - | - | - | - | - | - | 1 | 1 |
| CH | - | - | - | - | - | - | - | - | - | - | - | 2 | 2 |
| PA | 0,8 | 1 | 1,4 | 0,8 | 1 | 1 | 0,8 | 0,8 | 0,8 | 0,8 | 0,8 | 0,8 | 0,8 |
| Kta | - | - | - | - | - | 1 | - | - | - | - | - | - | - |
| Kta | - | - | - | 0,2 | - | - | 0,2 | 0,2 | 0,2 | 0,2 | 0,2 | 0,2 | 0,2 |

Pour les compositions ci-dessus, les propriétés thermomécaniques ont été mesurées. Les résultats sont présentés dans le tableau 2 ci-dessous.

**Tableau 2 : propriétés thermomécaniques des compositions adhésives réticulées**

| | 1 | 2 | 3 | 4 | 5 | 6 | 7 | 8 | 9 | 10 | 11 | 12 | 13 |
|---|---|---|---|---|---|---|---|---|---|---|---|---|---|
| Module de compression à 30°C (MPa) | 440 | 124 | 74 | 76 | 22 | 9 | 97 | 67 | 90 | 42 | 97 | - | - |
| Module de compression à 20°C (MPa) | 500 | 150 | 97 | 84 | 26 | 25 | 108 | 80 | 102 | 46 | 99 | 60 | 58 |
| Module de compression à 0°C (MPa) | 675 | 210 | 160 | 98 | 37 | 42 | 130 | 120 | 115 | 56 | 118 | 66 | 77 |
| Module de compression à -30°C (MPa) | 1000 | 455 | 380 | 165 | 89 | 102 | 215 | 200 | 213 | 99 | 214 | 230 | - |
| Contrainte à la rupture à 23°C (MPa) | 8,9 | 8,5 | 6,1 | 8 | 6,6 | 3,8 | 7,5 | 4,5 | 6,9 | 7 | 8,5 | 9,1 | 8,3 |
| Elongation à la rupture à 23°C (%) | 4 | 9 | 6 | 38 | 66 | 32 | 23 | 110 | 28 | 57 | 17 | 35 | 35 |
| Densité | - | 1,65 | - | - | - | - | - | - | - | - | - | 1,44 | 1,33 |

Le module de compression est mesuré selon la norme ASTM D695. Des éprouvettes de compression en forme de plots de dimension 20mmx10mmx10mm sont réalisées en appliquant la composition à tester dans un moule en téflon. Après 15 jours de réticulation à +23°C et 50% d'humidité relative, les éprouvettes sont retirées du moule, placées dans une enceinte maintenue à la température indiquée dans le tableau 2 et compressées à l'aide d'un dynamomètre.

L'élongation et la contrainte à la rupture sont mesurées selon la norme ISO 527-2. Des éprouvettes haltères de type h2 sont réalisées en appliquant la composition à tester dans un moule en téflon. Après 15 jours de réticulation à 23°C et 50% d'humidité relative, les éprouvettes sont retirées du moule, placées dans une enceinte maintenue à la température indiquée dans le tableau 2 et tractionnées à l'aide d'un dynamomètre.

La densité est mesurée selon la norme ISO2811-1 à l'aide d'un picnomètre.

Pour chacune des compositions adhésives, on observe que le module de compression augmente légèrement lorsque la température diminue mais il est inférieur ou égal à 1000 MPa à -30°C.

### Comparaison entre plusieurs types de formulations mastic

Les mastics suivants ont été testés :
- composition de l'exemple 11 ci-dessus selon l'invention ;
- PU 2K : Mastic polyuréthane bi-composants tel que décrit dans l'exemple C9 du document WO 2010/052671 (mélange de la résine R9 et du durcisseur D9). Après mélange des deux composants R9 et D9, les proportions respectives de polymères et de charges dans la composition PU2K sont 50% en poids du polyuréthane bi-composants et 50% en poids de charge ;
- Epoxy 2K : mastic époxy bi-composant décrit ci-dessous. Les proportions respectives de polymères et de charges dans la composition Epoxy 2k sont 67% en poids d'époxy bi-composants et 33% en poids de charge.

Les polymères époxy bi-composants sont généralement utilisés pour le calage des cuves de transport de gaz liquéfié sur une structure porteuse.

Epoxy 2K testé dans la présente demande est obtenu en mélangeant les parties A et B définies ci-dessous dans un rapport A/B de 100/50 :
Partie A :
   - 280g de résine époxy DER® 331 (disponible auprès de Dow Chemicals) ;
   - 280g de résine époxy DER® 351 (disponible auprès de Dow Chemicals) ;
   - 4,5g de plastifiant BYK® 080A (disponible auprès de BYK) ;
   - 112g de flexibilisant polyuréthane Desmocap® 11 (disponible auprès de Bayer) ;
   - 28g de dioxyde de titane TIONA 595 (fournisseur Millenium Chemicals) ;
   - 195g de carbonate de calcium précipité SOCAL® 312 (disponible auprès de Solvay) ;
   - 56g de billes de verre SCOTCHLITE® S38HS (disponible auprès de 3M) ;
   - 44,5g de fumée de silice CAB-O-SIL® EH5 (disponible auprès de Cabot).
Partie B :
   - 200g d'agent réticulant polyamide ANCAMIDE® 2353 (disponible auprès de Air Products) ;
   - 233g d'agent réticulant polyamine JEFFAMINE® D400 (disponible auprès de Huntsman) ;
   - 233g d'agent réticulant polyamine JEFFAMINE® T403 (disponible auprès de Huntsman) ;
   - 5,3g de plastifiant BYK® 080A (disponible auprès de BYK) ;
   - 13,3g de promoteur d'adhésion SILQUEST® A1110 (disponible auprès de Momentive) ;
   - 132,3g de TALC POWDER HAICHENG® N°2 (disponible auprès de Sheng Teai) ;
   - 100g de charge minérale OMYA® BL200 (disponible auprès de Omya) ;
   - 13,3g de billes de verre SCOTCHLITE® S38HS (disponible auprès de 3M);
   - 66,5g de fumée de silice CAB-O-SIL® EH5 (disponible auprès de Cabot).

Le module de compression et l'élongation à la rupture ont été mesurés et les résultats sont indiqués dans le tableau 3 ci-dessous.

**Tableau 3 : propriétés thermomécaniques de différents mastics**

| | Module de compression | | | Elongation à la rupture à 23°C |
|---|---|---|---|---|
| | +20°C | 0°C | -30°C | |
| Exemple 11 | 60 MPa | 66 MPa | 230 MPa | 35% |
| PU 2K | 130 MPa | 2500 MPa | 4000 MPa | 130% |
| Epoxy 2K | 1800 MPa | - | - | 1% |

Le polyuréthane bicomposants présente un module de compression qui augmente très fortement lorsque la température diminue. Son module de compression est de 2500 MPa à 0°C et de 4000 MPa à -30°C.

La composition comprenant le polymère époxy bicomposants présente un module de compression très élevé, de 1800 MPa, à une température de 20°C.

Au contraire, la composition de l'exemple 11 comprenant les polymères PS1 et PS2 entrant dans la composition adhésive définie dans la présente invention présente un module de compression passant de 60 MPa à 20°C à 230 MPa à -30°C.

Bien entendu, la présente invention n'est pas limitée aux exemples et au mode de réalisation décrits et représentés.

## Revendications

1. Utilisation d'une composition adhésive comprenant au moins un polymère silylé et au moins une charge pour l'assemblage d'une cuve comprenant un fluide à une température inférieure ou égale à -100°C et d'une structure porteuse choisie parmi la coque d'un navire, la carlingue d'un avion et un conteneur, ledit polymère silylé étant choisi parmi les polymères de formules (II), (IIbis), (III) ou (IV) ci-dessous : 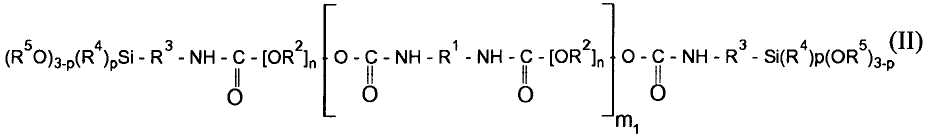 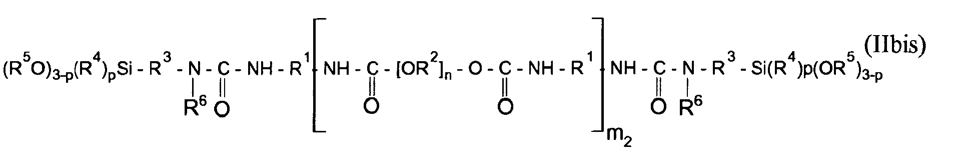
(R⁵O)₃₋ₚ(R⁴)ₚSi-R³-[OR²]ₙ-O-R³-Si(R⁴)ₚ(OR⁵)₃₋ₚ (III) 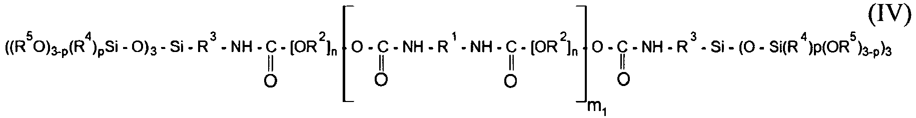
dans les formules (II), (IIbis), (III), et (IV) :
- R¹ représente un radical divalent hydrocarboné comprenant de 5 à 15 atomes de carbone qui peut être aromatique ou aliphatique, linéaire, ramifié ou cyclique,
- R³ représente un radical divalent alkylène linéaire ou ramifié comprenant de 1 à 6 atomes de carbone,
- R² représente un radical divalent alkylène linéaire ou ramifié comprenant de 2 à 4 atomes de carbone,
- R⁴ et R⁵, identiques ou différents, représentent chacun un radical alkyl linéaire ou ramifié comprenant de 1 à 4 atomes de carbone, avec la possibilité que quand il y a plusieurs radicaux R⁴ (ou R⁵), ces derniers soient identiques ou différents,
- R⁶ représente un atome d'hydrogène, un radical phényle ou un radical alkyle linéaire, ramifié ou cyclique comprenant de 1 à 6 atomes de carbone,
- n est un nombre entier tel que la masse molaire moyenne du bloc polyéther de formule -[OR²]ₙ- va de 300 g/mole à 40000 g/mole,
- m₁ est zéro ou un nombre entier tel que la masse molaire moyenne du polymère va de 500 g/mole à 50000 g/mole,
- m₂ est un nombre entier différent de zéro tel que la masse molaire moyenne du polymère va de 500 g/mole à 50000 g/mole,
- p est un nombre entier égal à 0, 1 ou 2.

2. Utilisation selon la revendication 1, dans laquelle le module de compression de la composition adhésive réticulée va de 15 à 600 MPa à 20°C.

3. Utilisation selon la revendication 1 ou 2, dans laquelle le module de compression de la composition adhésive réticulée est inférieur ou égal à 1000 MPa à -30°C.

4. Utilisation selon l'une des revendications 1 à 3, dans laquelle la composition adhésive réticulée présente une contrainte à la rupture à 23°C supérieure ou égale à 3MPa.

5. Utilisation selon l'une des revendications 1 à 4, dans laquelle le fluide à une température inférieure ou égale à -100°C est du gaz naturel liquéfié.

6. Utilisation selon l'une des revendications 1 à 5, dans laquelle la structure porteuse est la coque d'un navire.

7. Utilisation selon l'une des revendications 1 à 6, dans laquelle la composition adhésive comprend :
- de 30 à 80% en poids d'au moins un polymère silylé, et
- de 20 à 70% en poids d'au moins une charge,
par rapport au poids total de la composition adhésive.

8. Utilisation selon l'une des revendications 1 à 7, dans laquelle la composition adhésive comprend au moins deux charges différentes.

9. Utilisation selon la revendication 8, dans laquelle la composition adhésive comprend au moins une charge inorganique et au moins une charge organique.

10. Utilisation selon l'une des revendications 1 à 9, dans laquelle la composition adhésive comprend en outre au moins un catalyseur.

11. Utilisation selon l'une des revendications 1 à 10, dans laquelle la composition adhésive comprend au moins un polymère de formule (II), (IIbis) ou (III) et au moins un polymère de formule (IV).

12. Procédé d'assemblage d'une cuve comprenant un fluide à une température inférieure ou égale à -100°C et d'une structure porteuse choisie parmi la coque d'un navire, la carlingue d'un avion et un conteneur, ledit procédé comprenant :
a) l'application d'une composition adhésive telle que définie dans l'une des revendications 1 à 11 sur la surface externe de la cuve à une température allant de 15°C à 35°C et une humidité relative allant de 20% à 70%, et
b) le contre-collage de la surface externe de la cuve sur la surface de la structure porteuse.

13. Assemblage d'une cuve comprenant un fluide à une température inférieure ou égale à -100°C et d'une structure porteuse choisie parmi la coque d'un navire, la carlingue d'un avion et un conteneur **caractérisé en ce que** l'assemblage est réalisé à l'aide d'une composition adhésive telle que définie dans l'une des revendications 1 à 11.

## Patentansprüche

1. Verwendung einer Klebezusammensetzung, umfassend mindestens ein Silylpolymer und mindestens einen Füllstoff, zum Zusammenbauen eines Tanks, der ein Fluid mit einer Temperatur von weniger als oder gleich -100 °C aufweist, und einer Trägerstruktur, die aus dem Rumpf eines Schiffes, dem Rumpf eines Flugzeugs und einem Behälter ausgewählt ist, wobei das Silylpolymer aus den Polymeren der unten angeführten Formeln (II), (IIbis), (III) oder (IV) ausgewählt ist: 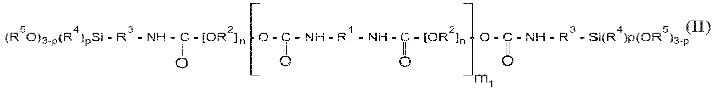 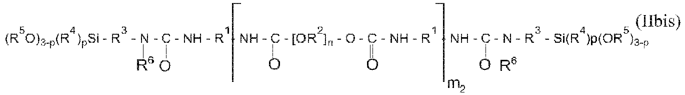
(R⁵O)₃₋ₚ(R⁴)ₚSi-R³-[OR²]ₙ-O-R³-Si(R⁴)ₚ(OR⁵)₃₋ₚ (III) 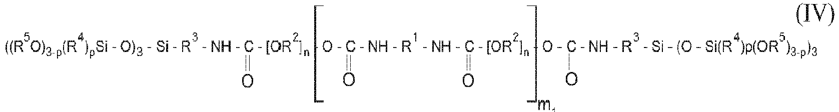
in den Formeln (II), (IIbis), (III) und (IV):
- steht R¹ für einen zweiwertigen Kohlenwasserstoffrest mit 5 bis 15 Kohlenstoffatomen, der aromatisch oder aliphatisch, linear, verzweigt oder cyclisch sein kann,
- steht R³ für einen linearen oder verzweigten zweiwertigen Alkylenrest mit 1 bis 6 Kohlenstoffatomen,
- steht R² für einen linearen oder verzweigten zweiwertigen Alkylenrest mit 2 bis 4 Kohlenstoffatomen,
- stehen R⁴ und R⁵, die gleich oder verschieden sind, jeweils für einen linearen oder verzweigten Alkylrest mit 1 bis 4 Kohlenstoffatomen, mit der Möglichkeit, dass, wenn es mehrere Reste R⁴ (oder R⁵) gibt, diese Letzteren gleich oder verschieden sind,
- steht R⁶ für ein Wasserstoffatom, einen Phenylrest oder einen linearen, verzweigten oder cyclischen Alkylrest mit 1 bis 6 Kohlenstoffatomen,
- ist n eine ganze Zahl, sodass die mittlere Molmasse des Polyetherblocks der Formel - [OR²]ₙ- von 300 g/mol bis 40000 g/mol beträgt,
- ist m₁ Null oder eine ganze Zahl, sodass die mittlere Molmasse des Polymers von 500 g/mol bis 50000 g/mol beträgt,
- ist m₂ eine von Null verschiedene ganze Zahl, sodass die mittlere Molmasse des Polymers von 500 g/mol bis 50000 g/mol beträgt,
- ist p eine ganze Zahl, die gleich 0, 1 oder 2 ist.

2. Verwendung nach Anspruch 1, wobei das Kompressionsmodul der vernetzten Klebezusammensetzung bei 20 °C von 15 bis 600 MPa beträgt.

3. Verwendung nach Anspruch 1 oder 2, wobei das Kompressionsmodul der vernetzten Klebezusammensetzung bei -30 °C niedriger als oder gleich 1000 MPa ist.

4. Verwendung nach einem der Ansprüche 1 bis 3, wobei die vernetzte Klebezusammensetzung bei 23 °C eine Bruchspannung aufweist, die größer als oder gleich 3 MPa ist.

5. Verwendung nach einem der Ansprüche 1 bis 4, wobei das Fluid mit einer Temperatur von weniger als oder gleich -100 °C verflüssigtes Erdgas ist.

6. Verwendung nach einem der Ansprüche 1 bis 5, wobei die Trägerstruktur der Rumpf eines Schiffes ist.

7. Verwendung nach einem der Ansprüche 1 bis 6, wobei die Klebezusammensetzung Folgendes umfasst:
- von 30 bis 80 Gew.% von mindestens einem Silylpolymer und
- von 20 bis 70 Gew.% von mindestens einem Füllstoff,
bezogen auf das Gesamtgewicht der Klebezusammensetzung.

8. Verwendung nach einem der Ansprüche 1 bis 7, wobei die Klebezusammensetzung mindestens zwei verschiedene Füllstoffe umfasst.

9. Verwendung nach Anspruch 8, wobei die Klebezusammensetzung mindestens einen anorganischen Füllstoff und mindestens einen organischen Füllstoff umfasst.

10. Verwendung nach einem der Ansprüche 1 bis 9, wobei die Klebezusammensetzung ferner mindestens einen Katalysator umfasst.

11. Verwendung nach einem der Ansprüche 1 bis 10, wobei die Klebezusammensetzung mindestens ein Polymer der Formel (II), (IIbis) oder (III) und mindestens ein Polymer der Formel (IV) umfasst.

12. Verfahren zum Zusammenbauen eines Tanks, der ein Fluid mit einer Temperatur von weniger als oder gleich -100 °C aufweist, und einer Trägerstruktur, die aus dem Rumpf eines Schiffes, dem Rumpf eines Flugzeugs und einem Behälter ausgewählt ist, wobei das Verfahren Folgendes aufweist:
a) das Auftragen einer Klebezusammensetzung, wie in einem der Ansprüche 1 bis 11 definiert, auf die Außenoberfläche des Tanks mit einer Temperatur von 15 °C bis 35 °C und einer relativen Feuchtigkeit von 20 % bis 70 % und
b) das Kaschieren der Außenoberfläche des Tanks auf der Oberfläche der Trägerstruktur.

13. Zusammenbau eines Tanks, der ein Fluid mit einer Temperatur von weniger als oder gleich -100 °C aufweist, und einer Trägerstruktur, die aus dem Rumpf eines Schiffes, dem Rumpf eines Flugzeugs und einem Behälter ausgewählt ist, **dadurch gekennzeichnet, dass** der Zusammenbau mit Hilfe einer Klebezusammensetzung, wie in einem der Ansprüche 1 bis 11 definiert, durchgeführt wird.

## Claims

1. Use of an adhesive composition, comprising at least one silylated polymer and at least one filler, for assembling a tank comprising a fluid at a temperature less than or equal to -100°C and a bearing structure selected from a ship's hull, an aeroplane's fuselage and a container, said silylated polymer being selected from the polymers of formulae (II), (IIa), (III) or (IV) below: 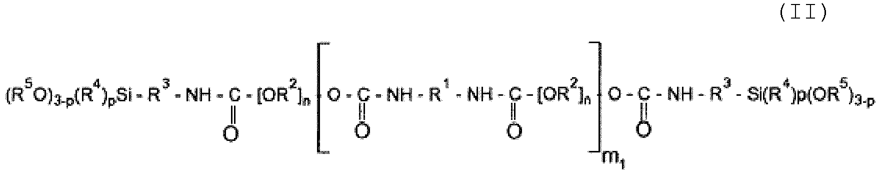 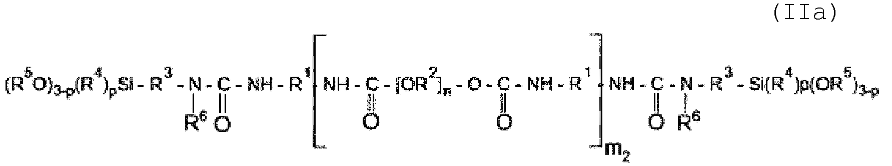
(R⁵O)₃₋ₚ(R⁴)ₚSi-R³-[OR²]ₙ-O-R³-Si(R⁴)ₚ(OR⁵)₃₋ₚ (III) 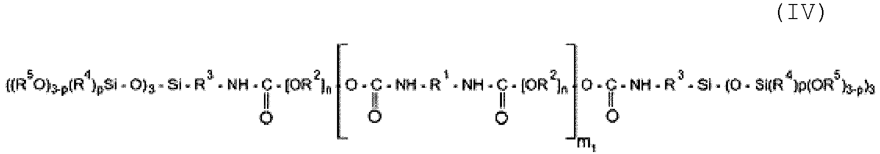
in the formulae (II), (IIa), (III) and (IV):
- R¹ represents a divalent hydrocarbon-based radical comprising from 5 to 15 carbon atoms, which may be aromatic or aliphatic, linear, branched or cyclic,
- R³ represents a linear or branched divalent alkylene radical comprising from 1 to 6 carbon atoms,
- R² represents a linear or branched divalent alkylene radical comprising from 2 to 4 carbon atoms,
- R⁴ and R⁵, which are identical or different, each represent a linear or branched alkyl radical comprising from 1 to 4 carbon atoms, with the possibility that, when there are several radicals R⁴ (or R⁵), the latter are identical or different,
- R⁶ represents a hydrogen atom, a phenyl radical or a linear, branched or cyclic alkyl radical comprising from 1 to 6 carbon atoms,
- n is an integer such that the mean molar mass of the polyether block of formula -[OR²]ₙ- ranges from 300 g/mol to 40 000 g/mol,
- m₁ is zero or an integer such that the mean molar mass of the polymer ranges from 500 g/mol to 50 000 g/mol,
- m₂ is an integer other than zero such that the mean molar mass of the polymer ranges from 500 g/mol to 50 000 g/mol,
- p is an integer equal to 0, 1 or 2.

2. Use according to Claim 1, wherein the compression modulus of the crosslinked adhesive composition ranges from 15 to 600 MPa at 20°C.

3. Use according to Claim 1 or 2, wherein the compression modulus of the crosslinked adhesive composition is less than or equal to 1000 MPa at -30°C.

4. Use according to one of Claims 1 to 3, wherein the crosslinked adhesive composition has a breaking stress at 23°C of greater than or equal to 3 MPa.

5. Use according to one of Claims 1 to 4, wherein the fluid at a temperature of less than or equal to -100°C is liquefied natural gas.

6. Use according to one of Claims 1 to 5, wherein the bearing structure is a ship's hull.

7. Use according to one of Claims 1 to 6, wherein the adhesive composition comprises:
- from 30 to 80% by weight of at least one silylated polymer, and
- from 20 to 70% by weight of at least one filler,
relative to the total weight of the adhesive composition.

8. Use according to one of Claims 1 to 7, wherein the adhesive composition comprises at least two different fillers.

9. Use according to Claim 8, wherein the adhesive composition comprises at least one inorganic filler and at least one organic filler.

10. Use according to one of Claims 1 to 9, wherein the adhesive composition also comprises at least one catalyst.

11. Use according to one of Claims 1 to 10, wherein the adhesive composition comprises at least one polymer of formula (II), (IIa) or (III) and at least one polymer of formula (IV).

12. Method for assembling a tank comprising a fluid at a temperature less than or equal to -100°C and a bearing structure selected from a ship's hull, an aeroplane's fuselage and a container, said method comprising:
a) application of an adhesive composition as defined in one of Claims 1 to 11 to the outer surface of the tank at a temperature ranging from 15°C to 35°C and a relative humidity ranging from 20% to 70%, and
b) back-bonding the outer surface of the tank to the surface of the bearing structure.

13. Assembly of a tank comprising a fluid at a temperature less than or equal to -100°C and a bearing structure selected from a ship's hull, an aeroplane's fuselage and a container, **characterized in that** the assembly is produced by means of an adhesive composition as defined in one of Claims 1 to 11.
